# EUROPEAN PATENT SPECIFICATION

(11) **EP 0 411 130 B1**
(45) Date of publication and mention of the grant of the patent: **01.03.1995**
(21) Application number: 89909052.6
(22) Date of filing: 03.08.1989
(51) Int. Cl.: G02C 11/02

(54) **SPECTACLES**
BRILLE
LUNETTES

(30) Priority: 10.02.1989 JP 14808/89 U; 29.05.1989 JP 62052/89 U
(43) Date of publication of application: 06.02.1991
(73) Proprietor: WASHI KOSAN CO., LTD., Soka-shi Saitama 340 (JP)
(72) Inventor: ONO, Kotaro, Fukui 910 (JP); MURAI, Masaru, Fukui 910 (JP)
(74) Representative: Fleuchaus, Leo, Dipl.-Ing.
(86) International application number: JP8900801
(87) International publication number: WO9009612

(56) References cited:
- WO-A-84/03154
- CH-A- 273 731
- DE-A- 3 304 347
- FR-A- 2 448 159
- FR-A- 2 565 367
- JP-U-55 128 009
- US-A- 2 981 022

## Description

### Technical Field

This invention relates to a pair of spectacles, and more particularly to a pair of spectacles capable of expressing a gorgeous atmosphere or enhancing the impression outstandingly.

### Background Art

The spectacles, in addition to the initial purpose of the function to correct the visual acuity and protect the eyes, are recently required to enhance the decorative function in order to increase the nature as accessories.

To satisfy this demand, it has been hitherto proposed to make variations on the material, shape and color of the lens frames, linkages for linking the lens frames, temples, and mounting parts for fitting temples to lens frames, in particular to adhere decorative members which reflect light to the surface of the lens frames and temples by adhesive or inlaying means.

US-A-2 981 022 describes a spectacle frame made of relatively high temperature polymerizing thermoplastics having recesses formed into its outer surfaces and containing decorative bodies, such as stones and brass parts, which are suspended and thus fixed in transparent low temperature polymerizing thermoplastics. In order to make the decorative bodies more clearly visible, the bottom of the recesses is coated with a dye or layer which is less transparent.

However, all these conventional spectacles are static, and lack dynamic elements. Therefore, sufficient exhibition of ornamental function may not be expected, and it is not satisfactory for expressing a luxurious atmosphere or give a striking impression.

In the light of such situation, this invention is intended to present a pair of spectacles capable of sufficiently exhibiting the ornamental function to express an extremely luxurious atmosphere or give a striking impression, and outstandingly enhancing the gorgeousness and the degree of attention.

### Disclosure of the invention

To achieve the above object, this invention presents a pair of spectacles which comprise lenses for spectacles, lens frames, linkages for linking these lens frames, temples, mounting parts for fitting temples to the lens frames and decorative member housing or housings disposed at least at one position thereof, wherein at least one light-reflecting or light-emitting decorative member is disposed in the housing or housings.

According to this constitution, the decorative members movably installed in the decorative member housings move spontaneously along with the actions of the wearer of the spectacles, such as the motion of the head, change of motion of the upper half of the body, and walking. Therefore, the light reflection plane, emission plane, or reflection position, and emission position vary significantly, and dynamic elements are brought about. Accordingly, the light reflection function or emission function originally possesed by the decorative members is combined with the oscillation of light induced by the movement of the decorative members to emphasize the reflection mode or emission mode, thereby expressing an outstandingly gorgeous atmosphere and giving a striking impression and brilliance to the viewers, so that the degree of attraction and decorative effect may be extremely enhanced.

Meanwhile, by composing the decorative member housing or housings of a concave part in which the decorative members can move and a transparent cover member to cover this concave part, or by composing of a transparent tube, sticking of dust or foreign matter to the decorative members may be prevented by the transparent cover member or transparent tube, and lowering of light reflection function or emission function of the decorative members may be avoided, so that excellent decorative effects may be maintained for a long period, and if the surface of the transparent cover member or transparent tube is contaminated with foreign matter, the decorative members not lowering in the function of reflection and emission may be recognized by a simple procedure of removing the foreign matter.

Besides, by filling the free space in the decorative member housing with a viscous decorative member suspension, metal foils which reflect light, such as gold foils, silver foils and aluminum foils, may be allowed to float in this decorative member suspension. In this constitution, by the reflected light from the decorative members possessing floating characteristics of the metal foils such as gold foils, silver foils and aluminum foils floating in the decorative member suspension, a brilliant atmosphere is expressed by the original reflective forms oscillating with a slow motion, and the spectacles with decorative effect and an outstanding attraction to the viewers may be presented.

### Brief Description of the Drawings

Fig. 1 is a perspective view of the spectacles showing an embodiment of the invention;
Fig. 2 is an enlarged sectional view along line II-II or line IIA-IIA in Fig. 1;
Fig. 3 is an enlarged sectional view at a corresponding position in Fig. 2 showing other embodiment of the invention;
Fig. 4 is an enlarged sectional view at a corresponding position in Fig. 2 showing a different embodiment of the invention;
Fig. 5 is a side view of a still other embodiment of the invention;
Fig. 6 is an enlarged sectional view along line VI-VI in Fig. 5; and
Fig. 7 is a front view showing an embodiment of forming decorative member housings in the lenses.

### Best Mode for Carrying out the Invention

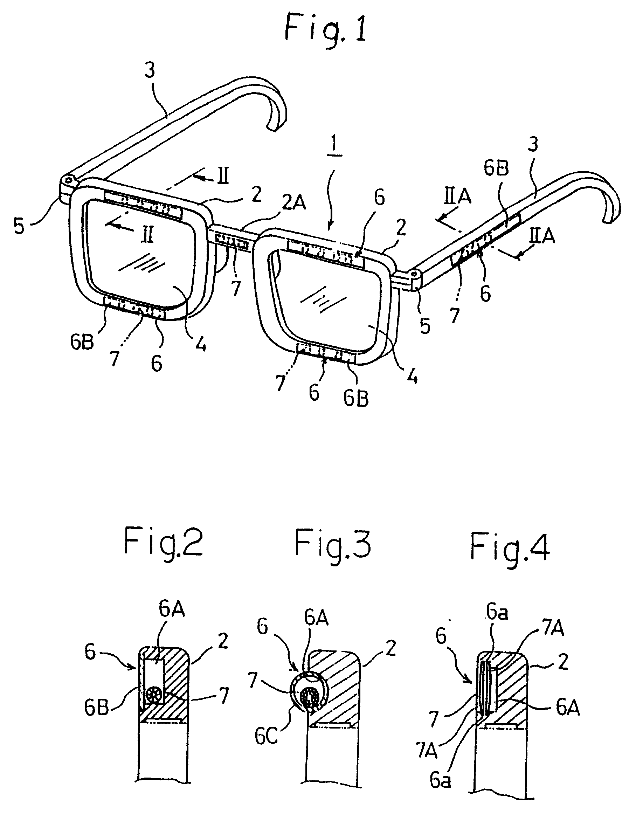

Fig. 1 is a perspective view showing an embodiment of the invention, in which a pair of spectacles 1 comprises lens frames 2, 2, a linkage 2A for linking these lens frames 2, 2, temples 3, 3, lenses 4, 4, and mounting parts 5, 5 for fitting temples 3, 3 to the lens frames 2, 2 in a manner free to rotate relatively on each other.

Decorative member housings 6 are disposed on the lens frames 2, linkage 2A, and temples 3, and plural decorative members 7 are placed in each of the decorative member housings 6 movably in such a manner as to be recognizable visibly from outside.

More specficially, the decorative member housings 6 form an enclosed space composed of a concave part 6A in a specific length being dented, as shown in Fig. 2, in the surface of the lens frame 2, linkage 2A and temple 3, and a transparent cover member 6B for covering the opening of this concave part 6A, and a plurality of decorative members 7 made of granular gems such as diamonds having polygonal reflection planes are rotatably installed in each of the deocrative member housings 6.

In this constitution, if the wearer of the spectacles 1 moves, such as head motion, change of motion of the upper half of the body and walking, the plural decorative members 7 spontaneously roll and move in the decorative member housings 6. Therefore, the polygonal reflection planes and reflection positions of light of the decorative members 7 largely fluctuate. As a result, the intrinsic light reflection function of the decorative members 7 and the oscillation and crossing of the reflected light brought about by rolling act synergistically, and the form of reflection is amplified to produce a luxurious atmosphere and give a striking impression and brilliancy to the seers, so that the ornamental effect may be significantly intensified.

Meanwhile, even if relatively inexpensive decorative members 7 fewer in facets are used, the reflection of light may be sufficiently maintained, and an impression of wearing expensive decorative members may be given.

In addition, since the decorative members 7 are contained in the enclosed space composed of the concave part 6A and the transparent cover member 6B for covering the opening of this concave part 6A, the trouble such as lowering of reflection function due to deposit of dust or foreign matter on the decorative members 7 in the course of use may be avoided, and the decorative effect may be maintained for a long period by a simple procedure of removing the foreign matter depositing on the surface of the transparent cover member 6B.

Fig. 3 shows a different embodiment of the invention. In this embodiment, the decorative member housing 6 is made of a transparent tube 6C of which both ends (not shown) are closed. That is, the transparent tube 6C having the both ends closed by crushing or with plugging pieces or the transparent tube 6C having its ends closed by the side walls of the concave part 6A is placed in the concave part 6A in a specific length formed in the surface of the lens frame 2, linkage 2A and temple 3 by adhesive or inlaying means, and in its inside, same as in the foregoing embodiment, plural decorative members 7 are inserted. Thus composed, the same action and effect as in the above embodiment are brought about.

Fig. 4 shows a further different embodiment of the invention. This example employs a slender decorative member 7 made of gems such as diamonds having pyramidal parts 7A, 7A formed at both ends in the axial direction. These pyramidal parts 7A, 7A are fitted rotatably about the axis to the decorative member housings 6, that is, to the guide rails 6a, 6a formed on both sides above and below the concave part 6A. In this constitution, too, when the wearer of the spectacles makes movement such as motion of the head, change of motion of the upper half of the body and walking, the decorative members 7 move as being guided by the guide rails 6a, 6a, and the reflection of light are amplified same as in the foregoing embodiments to produce a luxurious atmosphere, and give a striking impression and brilliance to the seers, thereby outstandingly intensifying the ornamental effect.

In the case of this embodiment, too, the concave part 6A may be covered with a transparent cover 6B, same as in the embodiment shown in Fig. 2.

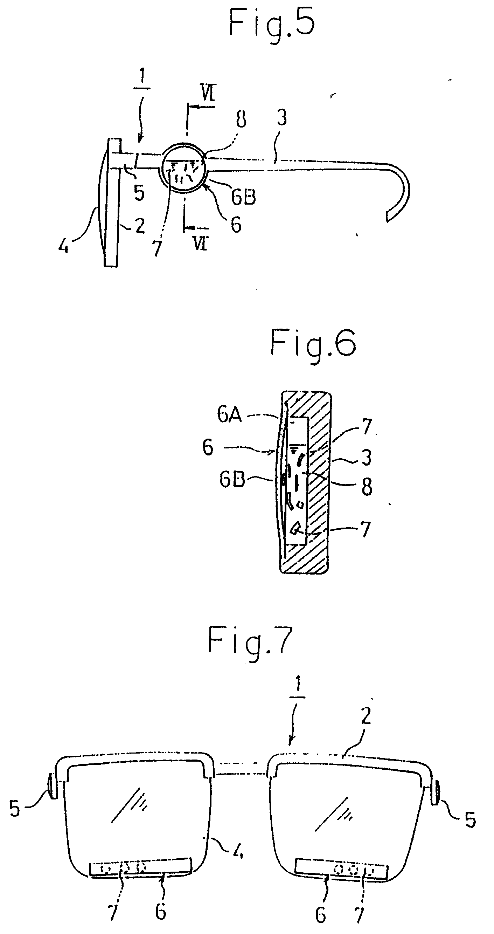

Fig. 5 and Fig. 6 show a still different embodiment of the invention. In this embodiment, a decorative member housings 6 having a relatively wide region is formed nearly in the middle of a temple 3. That is, a viscous colored or colorless decorative member suspension liquid 8 is charged in a space of the decorative member housings 6 having the surface side of a circular concave part 6A covered with a transparent covering member 6B, and metal foils such as gold foils, silver foils or aluminum foils are floating as decorative members 7.

By thus composing, different from the granular or slender decorative members as shown in the embodiments in Fig. 1 to Fig. 4, reflection modes of slowly moving light may be obtained, and an atmosphere different from the effects in the foregoing embodiments may be achieved to give a striking impression and brilliancy to the seers, so that the ornamental effect may be intensified.

In this embodiment, meanwhile, the decorative member housings 6 is disposed integrally with the temple 3, but it may be also possible to affix the decorative member housings 6 filled with metal foil containing liquid 8 made of different member from the temple 3, to the surface side of the temple 3.

In the embodiments shown in Fig. 1 to Fig. 6, decorative members 7 made of gems, metal foils and others reflecting of light are explained, but it may be also possible to use decorative members 7 which emit light by using fluorescent pigment or the like.

In the above embodiments, incidentally, the decorative member housings 6 are disposed in the lens frames 2, linkages 2A, and temples 3 of the spectacles 1, or in the temples 3 alone, but the decorative member housings 6 may be also provided in at least one or plural parts of the lens frames 2, linkage 2A, temples 3, lenses 4 and mounting parts 5.

Instead of the plural decorative members 7 disposed in plural decorative member housings 6 as explained herein, only one decorative member 7 may be disposed.

It may be also possible to properly combine the decorative members 7 made of granular, slender or metal foils and the decorative member housings 6 for moving such decorative members 7.

When mounting the decorative member housings 6 on the lenses 4, for example as shown in Fig. 7, in the spectacles 1 having the lens frames 2 only at the upper side of the lenses 4, transparent tubes 6C may be fitted to the lower side of the lenses 4, or the transparent tubes 6C may be affixed to the peripheral edge of the lenses 4 by adhering or fitting means.

### Industrial Applicability

Thus, the spectacles of the invention will be preferable spectacles for the wearers seeking gorgeous atmosphere and brilliancy, or wearers needing a striking impression.

## Claims

1. A pair of spectacles (1) comprising lenses (4) for spectacles, lens frames (2), linkages (2A) for linking these lens frames, temples (3), mounting parts (5) for fitting temples to the lens frames and decorative member housing or housings (6) disposed at least at one position thereof, wherein at least one light-reflecting or light-emitting decorative member (7) is disposed in the housing or housings,
characterized in that the decorative member or members (7) are movably disposed in the housing or housings (6) in a manner being recognizable visually from the outside.

2. A pair of spectacles according to claim 1,
characterized in that the decorative member housing or housings (6) are composed of a concave part (6A) for allowing the decorative member or members (7) to move in, and a transparent cover (6B) member for covering this concave part (6A).

3. A pair of spectacles according to claim 1,
characterized in that the decorative member housing or housings (6) are made of transparent tubes (6C).

4. A pair of spectacles according to claim 1, 2 or 3,
characterized in that the decorative member or members (7) which reflect light are composed of gems.

5. A pair of spectacles according to claim 1,
characterized in that the decorative member housing (6) defines an enclosure which is filled with a decorative member suspension liquid (8).

6. A pair of spectacles according to claims 1 and 5,
characterized in that the decorative members (7) are made of metal foils which reflect light.

## Patentansprüche

1. Ein Brille (1), beinhaltend Brillengläser (4), Linsenfassungen (2), eine Verbindung (2A) zur Verbindung dieser Linsenfassungen, Brillenbügel (3), Befestigungsteile (5) zur Befestigung der Brillenbügel (3) an den Linsenfassungen und Dekorelementgehäuse (6), die an mindestens einer dieser Positionen angeordnet sind, wobei mindestens ein lichtreflektierendes Dekorelement (7) in dem Gehäuse oder den Gehäusen angeordnet ist, dadurch gekennzeichnet, daß das Dekorelemente bzw. die Dekorelemente (7) beweglich in dem Gehäuse bzw. den Gehäusen angeordnet sind, so daß sie von außen sichtbar sind.

2. Eine Brille gemäß Anspruch 1, dadurch gekennzeichnet, daß das/die Dekorelementgehäuse (6) aus einem konkaven Teil (6A), in dem sich die Dekorelemente (7) bewegen können, und einer transparenten Abdeckung (6B) zur Abdeckung des konkaven Teils (6A) bestehen.

3. Eine Brille gemäß Anspruch 2, dadurch gekennzeichnet, daß das/die Dekorelementgehäuse (6) aus transparenten Röhren (6C) bestehen.

4. Eine Brille gemäß Anspruch 1, 2, oder 3, dadurch gekennzeichnet, daß das lichtreflektierende Dekorelement bzw. die Elemente (7) aus Edelsteinen bestehen.

5. Eine Brille gemäß Anspruch 1, dadurch gekennzeichnet, daß das Dekorelementgehäuse (6) einen Einschluß definiert, der mit einer Flüssigkeit (8) zur Suspension des Dekorelements gefüllt ist.

6. Eine Brille gemäß Anspruch 1, und 5, dadurch gekennzeichnet, daß die Dekorelemente (7) aus lichtreflektierenden Metallfolien bestehen.

## Revendications

1. Paire de lunettes (1) comprenant des verres (4) pour lunettes, des encadrements de verres (2), des éléments de liaison (2A) pour relier ces encadrements de verrres entre eux, des branches (3) et des organes de montage (5) pour fixer les branches aux encadrements des verres et une enveloppe ou plusieurs enveloppes, ou logements, (6) contenant des éléments décoratifs et qui sont disposés au moins en un endroit de ces différentes parties de monture, au moins un élément décoratif (7) réfléchissant ou émettant de la lumière étant disposé dans l'enveloppe ou les enveloppes, caractérisée en ce que l'élément ou les éléments décoratif(s) (7) est (sont) disposé(s) dans l'enveloppe ou les enveloppes, ou logement(s), (6) de façon déplaçable et de manière à pouvoir être reconnu(s) visuellement de l'extérieur.

2. Paire de lunettes selon la revendication 1, caractérisée en ce l'enveloppe ou les enveloppes, ou logement(s), (6) sont constitués d'une partie concave (6A) pour permettre à l'élément décoratif ou aux éléments décoratifs (7) d'y enrer, et d'un élément de recouvrement transparent (6B) pour recouvrir la partie concave (6A).

3. Paire de lunettes selon la revendication 1, caractérisée en ce que l'enveloppe ou les enveloppes (6) contenant les éléments décoratifs sont formées de tubes transparents (6C).

4. Paire de lunettes selon l'une quelconque des revendications précédentes, caractérisée en ce que l'élément ou les éléments décoratif(s) (7) réfléchissant la lumière sont constitués de pierres précieuses.

5. Paire de lunettes selon la revendication 1, caractérisée en ce que l'enveloppe, ou logement, (6) contenant des éléments décoratifs définit un espace clos qui est rempli d'un liquide (8) où les éléments décoratifs sont en suspension.

6. Paire de lunettes selon la revendication 1 ou 5, caractérisée en ce que les éléments décoratifs (7) sont formés de minces feuilles de métal qui réfléchissent la lumière.
